# EUROPÄISCHE PATENTSCHRIFT

(11) **EP 2 403 712 B1**
(45) Veröffentlichungstag und Bekanntmachung des Hinweises auf die Patenterteilung: **02.10.2019**
(21) Anmeldenummer: 11707838.6
(22) Anmeldetag: 08.03.2011
(51) Int. Cl.: B32B 3/12, E04C 2/36

(54) **LEICHTBAUPLATTE SOWIE VERFAHREN UND VORRICHTUNG ZU DEREN HERSTELLUNG**
LIGHTWEIGHT BUILDING BOARD AND METHOD AND DEVICE FOR THE PRODUCTION THEREOF
PANNEAU AINSI QUE PROCÉDÉ ET DISPOSITIF POUR SA FABRICATION

(30) Priorität: 11.03.2010 DE 102010011148
(43) Veröffentlichungstag der Anmeldung: 11.01.2012
(73) Patentinhaber: Fritz Egger GmbH & Co. OG, 6380 St. Johann in Tirol (AT)
(72) Erfinder: RIEPERTINGER, Manfred, 83093 Bad Endorf (DE)
(74) Vertreter: Cohausz & Florack
(86) Internationale Anmeldenummer: PCT/EP2011/053429
(87) Internationale Veröffentlichungsnummer: WO 2011/110538

(56) Entgegenhaltungen:
- EP-A1- 1 832 691
- DE-U1-202009 011 402

## Beschreibung

Die Erfindung betrifft eine Leichtbauplatte gemäß Oberbegriff von Patentanspruch 1. Ferner betrifft die Erfindung ein Verfahren zur Herstellung einer Leichtbauplatte, bei dem eine obere Deckplatte, eine untere Deckplatte und eine Mittellage bereitgestellt werden, bei dem die obere Deckplatte, die untere Deckplatte und die Mittellage zu einem Schichtaufbau angeordnet und miteinander verbunden werden, wobei sich die obere Deckplatte, die untere Deckplatte und die Mittellage parallel zu einer Längsebene erstrecken, und bei dem mindestens eine Stützkante aus mehreren separaten Einzellagen gebildet wird. Schließlich betrifft die Erfindung auch eine Vorrichtung zur Durchführung eines solchen Verfahrens.

Aus der nachveröffentlichten DE 20 2009 011 402 U1 ist eine Leichtbauplatte mit einer oberen Deckplatte, einer unteren Deckplatte und einer dazwischenliegenden Mittellage bekannt, wobei seitlich eine Stützkante aus mehreren separaten Einzellagen vorgesehen ist.

Die EP 1 832 691 A1 offenbart eine Leichtbauplatte mit einer Stützkante, die mehrere separate Einzellagen aufweist. Dabei erstreckt sich die innere der beiden Einzellagen von einer Vertiefung in der oberen Deckplatte bis zu einer Vertiefung in der unteren Deckplatte. Die äußere Einzellage erstreckt sich über die gesamte Stirnseite der Leichtbauplatte und liegt außerhalb des Bereichs zwischen den Deckplatten.

DE 20 2008 006 997 U1 offenbart mehrschichtige Stützkanten für Wabenkern-Verbundplatten, wobei diese Stützkanten in einer Vertiefung in den Oberflächen der Decklagen angebracht sind.

EP 2 127 832 A1 offenbart ein mehrschichtiges Kantenmaterial für ein plattenförmiges Werkstück, wobei das Kantenmaterial in einer Vertiefung in den Oberflächen des Werkstücks angebracht ist.

Leichtbauplatten sind aus dem Stand der Technik hinlänglich bekannt. Auch im Möbel- und Innenausbau werden diese seit langer Zeit in vielfältiger Weise verwendet.

Im gehobenen Einrichtungsbereich wurden ebenfalls Leichbauplatten im Möbelbau eingesetzt, weil durch deren Einsatz sehr große Wandstärken realisiert werden können, die besondere gestalterische Möglichkeiten bieten. In jüngerer Zeit werden auch bei Massenmöbeln verstärkt Leichtbauplatten verwendet, so dass auch ein Einsatz auf breiterem Gebiet wirtschaftlich möglich wird. Damit sind die verschiedenen Vorzüge der Leichtbauplatten einer größeren Schicht von Endverbrauchern zugängig.

Der Hersteller von Möbeln braucht Leichtbauplatten heute nicht mehr selber herzustellen, wie dies früher der Fall war. Mehrere Arbeitsgänge waren dazu notwendig. Zunächst musste ein Rahmen hergestellt werden, eventuell mit mehreren Querriegeln, auf den dann die Deckplatten aufgebracht wurden und der die verschiedenen Beschläge aufzunehmen hatte. Zwischen den Deckplatten wurden Leichtfaserplatten, mineralische Dammwolle, Kartonwaben oder ähnliches eingebracht. Damit wurde dem Element mehr Kompaktheit und eventuell auch eine verbesserte Stabilität verliehen. Zumeist mussten in separaten Arbeitsgängen die Deckschichten auch noch aufwändig oberflächenbehandelt werden. So waren als Deckplatten furnierte oder anderweitig beschichtete Hartfaserplatten üblich, wobei das fertige Element auch erst durch abschließendes Lackieren seine endgültige Oberfläche erhalten kann.

Heute werden Leichtbauplatten in zunehmendem Maß auch industriell gefertigt. Dazu wird eine leichte Mittellage mit Deckplatten versehen, zumeist durch Klebung. Je nach geforderter Stabilität der Platte werden unterschiedlich dicke Deckplatten, zumeist aus einem Holzwerkstoff wie Span- oder Faserplatte, eingesetzt. Die verwendeten Platten können bereits beschichtet sein, also etwa mit einem Laminat, einer Farbe, einem Druck mit Versiegelung, einer Melaminharzschicht, einem Furnier, etc. versehen sein. Als Mittellagen werden Kartonwaben oder Schaumstoffplatten bevorzugt. Für bestimmte Verwendungszwecke sind möglicher Weise auch Wabenmaterialien aus anderen Materialien als Papier oder Karton sinnvoll. So können dafür dünnste Plattenmaterialien oder auch dünnwandiges Metall, beispielsweise aus Aluminium eingesetzt werden. Es ist aber auch möglich als Mittellagen leichte Holzwerkstoffe wie etwa entsprechende Spanplatten oder Faserplatten oder auch Massivholz geringer Dichte, wie Balsaholz, einzusetzen. Mit entsprechenden Ausnehmungen versehen sind grundsätzlich alle Materialien zum Einsatz als leichte Mittellage möglich. So werden dafür beispielsweise auch Holzarten herangezogen, die zwar nicht besonders geringes Gewicht aufweisen, dafür aber gut verfügbar sind und sich gut mit zerspanenden Werkzeugen bearbeiten lassen. Auch sind leichte Mittellagen aus Halmbündeln, die miteinander verbunden zu flächigen Gebilden aufgeschnitten werden, sodass dann die Länge der Halmabschnitte der Dicke der Mittellage entspricht, bekannt.

An einer oder mehreren Stirnseiten einer Leichtbauplatte können aus Stabilitätsgründen Riegel oder Rahmen angeordnet werden, die üblicherweise aus einem Holzwerkstoff bestehen und relativ große Druckkräfte senkrecht zur Längsebene (Plattenebene) aufnehmen können.

Insoweit übernehmen die Riegel oder Rahmen also die Funktion einer Stützkante und verhindern dadurch, dass die leichte Mittellage, die häufig aus einer Pappwabenstruktur besteht, bei hohen Druckbelastungen senkrecht zur Längsebene Schaden nimmt.

Allerdings sind die genannten Riegel oder Rahmen, insbesondere wenn sie aus einem Holzwerkstoff bestehen, weniger oder kaum geeignet, andere als die senkrecht zur Längsebene wirkenden Druckkräfte aufzunehmen, insbesondere wenn es sich bei den Kräften um lokal auftretende handelt, die etwa von stirnseitig in die Leichtbauplatte und den Riegel eingebrachte Dübel oder Schrauben herrühren. So kann ein Dübel ein relativ großes Moment oder eine Schraube eine relativ große Zugkraft auf den Riegel übertragen, wobei diese lokal wirkenden Belastungen gerade bei einem Riegel aus einem Holzwerkstoff zu Beschädigungen und letztlich zu einer instabilen Gesamtkonstruktion des mit den Dübeln bzw. Schrauben zusammengehaltenen Bauteils, beispielsweise Möbels, führen können. Die zuvor genannte Problematik ergibt sich auch für Nuten, die beispielsweise zur Aufnahme einer Rückwand oder eines Schubkastens bis in das Material des Riegels reichen.

Es ist daher die Aufgabe der vorliegenden Erfindung, eine Leichtbauplatte anzugeben, die eine Stützkante aufweist, die unterschiedlichen Belastungen optimal standhält. Ferner soll ein entsprechendes Herstellungsverfahren und eine entsprechende Herstellungsvorrichtung angegeben werden.

Die zuvor hergeleitete und aufgezeigte Aufgabe wird gemäß einer ersten Lehre der vorliegenden Erfindung bei einer Leichtbauplatte mit einer sich parallel zu einer Längsebene erstreckenden oberen Deckplatte, mit einer sich parallel zur Längsebene erstreckenden unteren Deckplatte, mit einer sich zwischen der oberen Deckplatte und der unteren Deckplatte erstreckenden leichten Mittellage und mit mindestens einer Stützkante, die sich von der zur Mittellage gewandten Seite der oberen Deckplatte zu der zur Mittellage gewandten Seite der unteren Deckplatte erstreckt und in Richtung der Längsebene benachbart zur Mittellage angeordnet ist, wobei die mindestens eine Stützkante mehrere separate Einzellagen aufweist, dadurch gelöst, dass in der oberen und/oder unteren Deckplatte jeweils innenseitig mehrere Vertiefungen vorgesehen sind, wobei jede Vertiefung der jeweiligen Deckplatte mindestens eine Einzellage der Stützkante aufnimmt und wobei die jeweilige Einzellage in der jeweiligen Vertiefung einen Anschlag zur Mitte der Leichtbauplatte hin findet.
Separat bedeutet dabei, dass die Einzellagen separate Bauteile bilden, die also einzeln hergestellt worden sind. Erst durch Zusammensetzen dieser einzelnen Bauteile, das heißt Einzellagen, ergibt sich dann die erfindungsgemäß verwendete Stützkante. Dagegen ist eine Stützkante aus einem in mehreren Schichten gestreuten und dann verpresstem Holzwerkstoff keine mehrere separate Einzellagen aufweisende Stützkante.

Gerade auf dem technischen Gebiet der Leichtbauplatten hat die Verwendung einer Stützkante aus mehreren separaten Einzellagen entscheidende Vorteile. So hat sich gezeigt, dass mehrere Einzellagen höheren Belastungen standhalten als ein einfacher Riegel aus einem Holzwerkstoff. Dies gilt nicht nur für die Druckbelastungen senkrecht zur Längsebene (Plattenebene), für die die herkömmlichen Riegel vorgesehen werden, um die leichte Mittellage vor Beschädigung zu schützen, sondern gerade auch für alle anderen Belastungen, insbesondere lokal auftretende Belastungen durch Momente, die beispielsweise von Dübeln oder in Nuten geführten Rückwänden oder Böden herrühren, oder durch Zugkräfte, die beispielsweise von Schrauben auf das Material der Stützkante einwirken. Dies gilt insbesondere dann, wenn mehrere, vorzugsweise alle Einzellagen winkelig, insbesondere senkrecht, zur Längsebene verlaufen. Gerade dann können auch in besonders stabiler Weise Dübel, Schrauben oder dergleichen an der Stirnseite einer Leichtbauplatte in das Material der Stützkante eingebracht werden. Es besteht dann auch bei relativ großen Belastungen nicht mehr die Gefahr, dass Teile der Stützkante ausbrechen und dadurch die Stabilität der Gesamtkonstruktion verringern. Auch können Nuten, die bis in das Material der Stützkanten hineinreichen, beispielsweise Rückwandnuten oder Schubkastennuten, aber auch Lochreihenbohrungen etc. in stabiler Weise realisiert werden. Ein weiterer Vorteil ist aber auch, dass durch die Verwendung separater Einzellagen im Bereich der Stirnkante der Leichtbauplatte auch ein nicht-gerader, insbesondere kurviger Verlauf der Stützkante realisiert werden kann. Da der nichtgerade Verlauf der Stützkante ohne nachträgliches Abtragen von Material der Stützkante realisiert werden kann, ist auch die Oberfläche der Stützkante und damit der späteren Stirnkante der Leichtbauplatte hochwertiger als in dem Fall, dass ein gerader Riegel aus einem Holzwerkstoff als Stützkante durch Abtragen von Material an den nicht-geraden Verlauf angepasst werden muss. Eine hochwertige Oberfläche im Bereich der Stützkante führt zu einer besseren Beschichtbarkeit und/oder zu einem verminderten Risiko des Eindringens von Feuchtigkeit.

Aufgrund der erhöhten Stabilität durch Verwendung mehrerer separater Einzellagen kann für die Stützkante grundsätzlich dasselbe Material wie bei herkömmlichen Riegeln verwendet werden. So können eine oder mehrere, vorzugsweise alle Einzellagen aus einem lignozellulose enthaltenden Material, insbesondere einem Holzwerkstoff, oder aus einem Schichtstoff bestehen. Als Holzwerkstoff können beispielsweise Span-, Faser- oder OSB-Pressteile bzw. -platten verwendet werden. Ein Schichtstoff kann beispielsweise aus mehreren Lagen von harzgetränktem Papier bestehen. Grundsätzlich sind auch andere Materialien wie Kunststoff oder Metall denkbar. Grundsätzlich können die Einzellagen auch aus unterschiedlichen Materialien bestehen und/oder unterschiedliche Materialeigenschaften aufweisen. Auf diese Weise kann die Leichtbauplatte an unterschiedliche Belastungsszenarien individuell angepasst werden. Beispielsweise ist eine Kombination verschiedener Holzwerkstoffe denkbar. Auch kann durchaus mindestens eine Lage von Massivholz in der Stützkante vorgesehen sein. Aber selbst bei Verwendung desselben Materials, wie es bisher bei Riegeln verwendet wurde, nämlich einem Holzwerkstoff, wird durch das Vorsehen mehrerer separater Einzellagen die Stabilität deutlich gegenüber einem herkömmlichen Riegel erhöht.

Der zuvor beschriebene Effekt der Erhöhung der Stabilität der Leichtbauplatte im Falle von Belastungen, die keine quer zur Längsebene verlaufende Druckbelastungen sind, kann dadurch noch weiter erhöht werden, dass die Stützkante 3 bis 15, bevorzugt 4 bis 12, besonders bevorzugt 5 bis 10 Einzellagen aufweist. Neben einer Stabilitätserhöhung hat sich außerdem herausgestellt, dass die angegebenen Bereiche trotz Einbringung mehrerer separater Einzellagen dennoch eine relativ einfache Herstellung mit einem relativ geringen aparativen Aufwand erlauben.

Gemäß einer weiteren Ausgestaltung der erfindungsgemäßen Leichtbauplatte haben mehrere, vorzugsweise alle Einzellagen dieselbe Länge, Breite und/oder Dicke. Mit Länge ist die Abmessung in der Richtung der längsten Erstreckung gemeint. Mit Breite ist die dazu senkrechte Abmessung gemeint, die sich in Richtung von der einen zur anderen Deckplatte erstreckt. Die Dicke meint schließlich die zur Länge und Höhe senkrechte Abmessung, die auch als Stärke bezeichnet werden kann. Einzellagen, die dieselbe Länge, Breite und/oder Dicke haben, führen zu einer besonders einfachen Herstellung der Stützkante und damit der Leichtbauplatte und bewirken eine besonders gleichmäßige Verteilung der auf die Stützkante wirkenden Belastungen. Es ist aber auch denkbar, dass mehrere, vorzugsweise alle Einzellagen eine unterschiedliche Länge, Breite und/oder Dicke haben, wodurch eine individuelle Anpassung an die Belastungssituation einer Leichtbauplatte möglich ist.

Gemäß noch einer weiteren Ausgestaltung der erfindungsgemäßen Leichtbauplatte sind mehrere, vorzugsweise alle Einzellagen parallel zueinander angeordnet. Im Falle eines nicht-geraden Verlaufs der Stützkante sind die Einzellagen bevorzugt über zumindest einen Teil ihrer Länge, vorzugsweise über ihre gesamte Länge, mit einem gleich bleibendem Abstand zur jeweils benachbarten Einzellage angeordnet. Auch dadurch wird eine optimale Stabilität und Kraftverteilung innerhalb der Stützkante und Leichtbauplatte gewährleistet.

Gemäß noch einer weiteren Ausgestaltung der erfindungsgemäßen Leichtbauplatte berühren sich benachbarte Einzellagen. Bevorzugt berühren sich dabei alle benachbarten Einzellagen, obwohl einzelne Einzellagen von der jeweils benachbarten Einzellage auch beabstandet sein können. Indem sich benachbarte Einzellagen berühren, wobei die sich berührenden Einzellagen insbesondere miteinander verklebt sind, werden auf eine der Einzellagen wirkende Belastungen, beispielsweise Zugkräfte oder Momente, auch auf die anderen Einzellagen und darüber wiederum auf verschiedene Stellen der Deckplatten der Leichtbauplatten verteilt. Durch diese optimierte Kraftverteilung kann die Stützkante auch besonders hohen Belastungen standhalten.

Wie gesagt müssen nicht zwangsläufig alle Einzellagen mit den jeweils benachbarten Einzellagen in Kontakt sein, sondern es ist auch denkbar, dass zwischen benachbarten. Einzellagen ein Zwischenraum ausgebildet ist, wobei mindestens einer der Zwischenräume zumindest teilweise mit Luft und/oder einem Füllmaterial, insbesondere einem Schaum, gefüllt ist. Die Stützkante kann also auch, teilweise oder vollständig, aus sich nicht berührenden Einzellagen bestehen, wobei der zwischen sich nicht berührenden Einzellagen entstehende Zwischenraum eine Gewichtsreduzierung der Stützkante und damit der Leichtbauplatte ermöglicht. Dabei werden auf eine Einzellage wirkende Belastungen zwangsläufig auch auf diese Einzellage nicht berührende benachbarte Einzellagen übertragen, wenn die die Belastungen auf die jeweilige Einzellage übertragenden Elemente, beispielsweise Schrauben oder Dübel, durch mehrere Einzellagen hindurchreichen und/oder in mehreren Einzellagen verankert sind. Ist nicht garantiert, dass in jedem Fall das die Belastungen auf die jeweilige Einzellage übertragende Element auch noch mit anderen Einzellagen in Kontakt kommt, oder für den Fall einer zusätzlichen Stabilitätserhöhung bei möglichst geringem Gewicht, kann einer der Zwischenräume oder können mehrere der Zwischenräume zwischen jeweils benachbarten Einzellagen auch mit einem Füllmaterial, beispielsweise einem Schaum, gefüllt sein.

Gemäß noch einer Ausgestaltung der erfindungsgemäßen Leichtbauplatte ist vorgesehen, dass in das Material einer oder mehrerer, vorzugsweise aller Einzellagen und/oder zwischen zwei benachbarten, vorzugsweise zwischen allen benachbarten Einzellagen, eine Armierung eingebracht bzw. angeordnnet ist, die insbesondere Fasermaterial und/oder Metall aufweist. Als Armierung kann eine Lage Faservlies mit entsprechender Harzmatrix wie etwa ein Glasfaservlies oder Carbonfaservlies in einer Polyesterharz- oder Epoxydharzmatrix vorgesehen sein. Auf diese Weise kann die Steifigkeit und die Biegefestigkeit der Stützkante deutlich erhöht werden.

Es kann aber auch gewünscht sein, eine sehr elastische Lage vorzusehen, um der Stützkante ausgeprägte, zähelastische Eigenschaften zu verleihen. Dazu könnte eine dickere Kleberschicht aus einem elastischen Klebstoff, der also auch im ausgehärteten Zustand noch elastisch ist, vorgesehen werden, beispielsweise aus einem Klebstoff auf Basis von Silikon oder Kautschuk. Mit einer dickeren Kleberschicht ist eine so dicke Schicht gemeint, dass sich die benachbarten Einzellagen nicht berühren, sondern durch die Elastizität des Klebers relativ zueinander beweglich sind.

Bei der erfindungsgemäßen Leichtbauplatte kann gemäß einer weiteren Ausgestaltung vorgesehen sein, dass sich mehrere, vorzugsweise alle Einzellagen von der zur Mittellage gewandten Seite der oberen Deckplatte zu der zur Mittellage gewandten Seite der unteren Deckplatte erstrecken. Erfindungsgemäß sind in der oberen Deckplatte und/oder der unteren Deckplatte innenseitig mehrere Vertiefungen vorgesehen. Eine solche Vertiefung kann ein Falz oder eine Nut sein. Es können auch in der oberen Deckplatte und/oder der unteren Deckplatte innenseitig mehrere Vertiefungen vorgesehen sein, die unterschiedlich tief sind und insbesondere einen Stufenfalz bilden. Auf diese Weise können vom Anwendungsfall abhängige optimierte Stützkanten mit den beiden Deckplatten verbunden bzw. an oder in diesen verankert werden. Auch wird durch einen Falz, beispielsweise Stufenfalz, oder durch eine Nut ein Anschlag für die jeweilige Einzellage im Innern der Leichtbauplatte erzeugt. Durch eine Nut kann ebenfalls eine Verrastung im Innern der Leichtbauplatte erzeugt werden. Auf diese Weise können über die erfindungsgemäß verwendete Stützkante relativ hohe Belastungen in Richtung der Längsebene, insbesondere in Richtung des Platteninnern, auf die Leichtbauplatte übertragen und von den Deckplatten aufgenommen werden, ohne dabei die Mittellage zu beschädigen. Solche Mittel zum Bilden eines Anschlags bzw. einer Verrastung, also die genannten Vertiefungen, insbesondere Falze oder Nuten, vereinfachen auch die Herstellung der Leichtbauplatte und insbesondere das Verbinden der separaten Einzellagen mit dem die Leichtbauplatte bildenden Schichtaufbau.

Die erfindungsgemäß verwendete Stützkante kann grundsätzlich an verschiedenen Stellen im Innern der Leichtbauplatte angeordnet sein. Bevorzugt ist die mindestens eine Stützkante an einer Stirnseite der Leichtbauplatte angeordnet. Insbesondere können auch zwei solcher Stützkanten vorgesehen sein, wobei an zwei gegenüberliegenden Stirnseiten je eine der Stützkanten angeordnet ist. Dabei kann vorgesehen sein, dass die Außenseite der mindestens einen Stützkante mit der Stirnkante der oberen Deckplatte und/oder der Stirnkante der unteren Deckplatte fluchtet. Es ist auch denkbar, dass die zur Außenseite weisende Einzellage (die äußere Einzellage) der Stützkante eine größere Breite als die mindestens eine weiter innenliegende Einzellage hat und insbesondere in Richtung der Längsebene die Stirnkante der oberen Deckplatte und/oder die Stirnkante der unteren Deckplatte überdeckt, bevorzugt also die gesamte Stirnkante der Leichtbauplatte einnimmt. Solchermaßen angeordnete Stützkanten bewirken einerseits, dass auch im äußersten Kantenbereich eine Übertragung von Belastungen zwischen der Stützkante und der bzw. den jeweils benachbarten Deckplatten stattfindet, was insbesondere in besagtem Kantenbereich zu einer erhöhten Stabilität und Belastbarkeit führt. Außerdem schafft eine solche Anordnung, insbesondere wenn die sichtbare Außenseite der äußeren Einzellage mit einer entsprechenden Oberfläche versehen ist, beispielsweise beschichtet ist, eine ansprechende Optik und verhindert, dass stirnseitig Feuchtigkeit in die Leichtbauplatte eindringt.

Zur weiteren Erhöhung der Stabilität ist gemäß noch einer weiteren Ausgestaltung der Leichtbauplatte vorgesehen, dass die Innenseite der mindestens einen Stützkante die Mittellage berührt. So kann auch, zumindest zu einem gewissen Teil, die Mittellage Belastungen von der Stützkante aufnehmen.

Als besonders geeignet für eine erfindungsgemäße Leichtbauplatte hat sich erwiesen, wenn gemäß einer weiteren Ausgestaltung die obere Deckplatte und/oder die untere Deckplatte aus einem lignozellulose enthaltenden Material, insbesondere einem Holzwerkstoff, vorzugsweise einer Span-, Faser- oder OSB-Platte, oder aus einem Schichtstoff, vorzugsweise mit mehreren Lagen von harzgetränktem Papier, besteht. Deckplatten eines solchen Materials sind besonders stabil und bieten gerade in Kombination mit der erfindungsgemäß verwendeten Stützkante einen optimalen Schutz der Mittellage vor über die Stützkante bzw. über eine der Deckplatten einwirkenden Belastungen.

Gemäß wiederum einer weiteren Ausgestaltung der Leichtbauplatte weist die Mittellage eine Wabenstruktur, insbesondere Pappwabenstruktur, auf. Eine solche Struktur führt zu einem besonders geringen Gewicht der Leichtbauplatte und ist außerdem geeignet, bis zu einem gewissen Grad Belastungen zumindest senkrecht zur Längsebene aufzunehmen.

Ein bevorzugter Einsatzbereich einer Stützkante aus mehreren Einzellagen, wie sie vorangehend definiert wurde, sind speziell dünne Leichtbauplatten. Gemeint sind insbesondere solche bis 19 mm, bevorzugt bis 15 mm, besonders bevorzugt bis 13 mm Dicke. Gerade hier kommt es oft auf eine feste Anbindung von Beschlagelementen an, was aber speziell bei dünnen, einschichtigen Stützkanten oftmals nicht möglich ist.

Ein weiterer, bevorzugter Einsatzbereich einer Stützkante aus mehreren Einzellagen sind Leichtbauplatten mit dünnen Deckplatten. Gemeint sind solche Deckplatten mit einer Dicke bis 3,5 mm, bevorzugt bis 2,5 mm, besonders bevorzugt bis 1,8 mm. Hier ist im speziellen ein fester Verbund zwischen einer stabilen Stützkante und den Deckplatten erforderlich, was aber bei einschichtigen Stützkanten nur unbefriedigend gewährleistet werden kann.

Ein besonders prädestiniertes Anwendungsgebiet einer Stützkante aus mehreren Einzellagen ist die Kombination aus dünner Leichtbauplatte mit dünnen Deckplatten. Insbesondere finden solche Leichtbauplatten Anwendung als Ladenböden, auch als Schubkastenböden bezeichnet. Vor allem bei Laden- oder allgemein jeder Art von Auszügen, kommt es auf geringe Bauhöhe sowie geringes Gewicht bei hoher Tragfestigkeit an, wobei eine stabile Anbindung zu den Seitenwänden gewährleistet sein muss, zumal über diese die oft beträchtlichen Lasten, resultierend beispielsweise aus Geschirr oder diversen Lebensmitteln, abgetragen werden.

Die zuvor hergeleitete und aufgezeigte Aufgabe wird gemäß einer zweiten Lehre der vorliegenden Erfindung gelöst durch ein Verfahren zur Herstellung einer Leichtbauplatte, insbesondere einer Leichtbauplatte wie sie zuvor beschrieben wurde, bei dem eine obere Deckplatte, eine untere Deckplatte und eine Mittellage bereitgestellt werden, bei dem die obere Deckplatte, die untere Deckplatte und die Mittellage zu einem Schichtaufbau angeordnet und miteinander verbunden werden, wobei sich die obere Deckplatte, die untere Deckplatte und die Mittellage parallel zu einer Längsebene erstrecken, bei dem der Schichtaufbau in eine Produktionsbewegungsrichtung als Endlosstrang transportiert wird, bei dem in der oberen Deckplatte und/oder der unteren Deckplatte jeweils innenseitig mehrere Vertiefungen vorgesehen werden und bei dem mindestens eine Stützkante aus mehreren separaten Einzellagen dadurch gebildet wird, dass die separaten Einzellagen dem Schichtaufbau in Produktionsbewegungsrichtung einzeln seitlich zugeführt werden und dass in jede Vertiefung eine oder mehrere Einzellagen eingesetzt werden.

Eine solchermaßen hergestellte Leichtbauplatte ist dann gerade im Kantenbereich besonders belastbar, ohne dass die Belastungen dabei die Mittellage beschädigen. Dabei können erstmals auch andere Belastungen als senkrecht zur Längsebene verlaufende Druckbelastungen optimal aufgenommen und in der Leichtbauplatte verteilt werden. Dies gilt insbesondere dann, wenn in einem weiteren Verfahrensschritt eine Rückwand-, Boden- oder Schubkastennut oder dergleichen in Richtung der Längsebene direkt in die Stützkante oder senkrecht zur Längsebene durch eine der Deckplatten hindurch bis in den Bereich der Stützkante eingebracht, insbesondere eingefräst wird. Entsprechendes gilt auch für Lochreihenbohrungen. Auch das Einbringen von Dübeln, insbesondere Holzdübeln, Schrauben etc. führt nicht zu einer Verringerung der Stabilität im Kantenbereich der fertigen Leichtbauplatte. Ein weiterer Vorteil ist, dass durch die Verwendung von Einzellagen die mindestens eine Stützkante auf einfache Weise an einen nicht-geradlinigen, insbesondere kurvigen Verlauf der jeweiligen Stirnkante der Leichtbauplatte angepasst werden kann.

Gemäß einer Ausgestaltung des erfindungsgemäßen Verfahrens werden mehrere, vorzugsweise alle Einzellagen in zur Längsebene winkeliger, insbesondere senkrechter, Ausrichtung mit dem Schichtaufbau verbunden. Sollen Elemente, die Belastungen in die Stützkante übertragen können, insbesondere Dübel, Schrauben oder dergleichen, an der Stirnseite einer Leichtbauplatte in das Material der Stützkante eingebracht werden, so kann durch die zur Längsebene winkelige, insbesondere senkrechte Ausrichtung der Einzellage eine besonders stabile Ausführung erreicht werden.

Bei dem erfindungsgemäßen Verfahren werden die Einzellagen dem Schichtaufbau in Produktionsbewegungsrichtung einzeln zugeführt. Einzeln bedeutet, dass die Einzellagen als separate Elemente zugeführt und erst während oder nach dem Zuführen miteinander verbunden werden. Die einzelne Zuführung der Einzellagen hat den Vorteil einer noch besseren Anpassung der Stützkante an einen nicht-geradlinigen, insbesondere kurvigen Verlauf der jeweiligen Stirnkante der Leichtbauplatte.

Bei dem erfindungsgemäßen Verfahren werden gemäß noch einer weiteren Ausgestaltung mehrere, vorzugsweise alle Einzellagen bezogen auf die Produktionsbewegungsrichtung an derselben Stelle oder an voneinander beabstandeten Stellen mit dem Schichtaufbau zusammengeführt. Dadurch können auf einfache Weise individuell aufgebaute Stützkanten und/oder ein individueller Verlauf der Stützkante erreicht werden.

Um die Einzellagen optimal im Bereich der Stirnkante des Stirnaufbaus bzw. der späteren Leichtbauplatte verbinden zu können, werden gemäß einer weiteren Ausgestaltung des erfindungsgemäßen Verfahrens die Einzellagen über eine oder mehrere Rollen an den Schichtaufbau gedrückt. Die Rollen können dabei einerseits zum Zuführen der Einzellagen dienen. Andererseits können die Einzellagen durch die Rollen auch in der gewünschten Position relativ zum Schichtaufbau gehalten und/oder für eine bestimmte Zeit an den Schichtaufbau gepresst werden, beispielsweise solange, bis das eventuell vorhandene Klebemittel seine Klebewirkung zumindest teilweise entfaltet.

Gemäß noch einer weiteren Ausgestaltung des erfindungsgemäßen Verfahrens ist vorgesehen, dass 3 bis 15, bevorzugt 4 bis 12, besonders bevorzugt 5 bis 10 Einzellagen zugeführt werden. Auf diese Weise wird eine relativ hohe Stabilität im Kantenbereich bei gleichzeitig relativ einfacher Herstellung der Stützkante erreicht.

Gemäß wiederum einer weiteren Ausgestaltung des erfindungsgemäßen Verfahrens werden mehrere, vorzugsweise alle Einzellagen parallel zueinander angeordnet. Im Falle eines nicht-geraden Verlaufs der Stützkante werden die Einzellagen bevorzugt über zumindest einen Teil ihrer Länge, vorzugsweise über ihre gesamte Länge, mit einem gleich bleibenden Abstand zur jeweils benachbarten Einzellage angeordnet. Dies erhöht die Stabilität im Bereich der Stützkante weiter und führt zu einer optimierten Kraftverteilung innerhalb der Stützkante.

Gemäß wiederum einer weiteren Ausgestaltung des erfindungsgemäßen Verfahrens ist vorgesehen, dass zwischen benachbarten Einzelllagen ein Zwischenraum ausgebildet wird, wobei mindestens einer der Zwischenräume zumindest teilweise befüllt, insbesondere ausgeschäumt, wird. Dadurch kann, wie bereits zuvor ausgeführt wurde, einerseits eine Gewichtsreduzierung und andererseits auch eine hohe Stabilität im Bereich der Stirnkante der späteren Leichtbauplatte erreicht werden.

Wie gesagt kann zur Herstellung der Stützkante auch ein Klebemittel verwendet werden. Gemäß einer Ausgestaltung des erfindungsgemäßen Verfahrens werden mehrere, vorzugsweise alle Einzellagen miteinander verklebt. Das Verkleben kann während des Zuführens erfolgen, indem beispielsweise das Klebemittel auf die Einzellagen oder Einzellagenstränge aufgebracht wird, bevor diese mit dem Schichtaufbau in Kontakt kommen. Grundsätzlich ist es aber auch möglich, das Klebemittel nur im Bereich der Stirnkante des die spätere Leichtbauplatte bildenden Schichtaufbaus aufzubringen, so dass also erst das Klebemittel aufgebracht wird und dann die jeweilige Einzellage zugeführt und auf die mit dem Klebemittel versehene Oberfläche im Bereich der Stirnkante des Schichtaufbaus gedrückt wird.

Ferner kann gemäß einer weiteren Ausgestaltung des erfindungsgemäßen Verfahrens vorgesehen sein, dass in der oberen Deckplatte und/oder der unteren Deckplatte innenseitig mehrere Vertiefungen vorgesehen werden, die unterschiedlich tief sind und insbesondere einen Stufenfalz bilden. Auf diese Weise können für den jeweiligen Anwendungsfall optimierte Stützkanten mit den beiden Deckplatten verbunden bzw. an oder in diesen verankert werden. Außerdem wird durch eine Vertiefung, die einen Anschlag oder eine Verrastung bildet bzw. ermöglicht, das Verbinden der Einzellagen mit dem Schichtaufbau und damit das gesamte Herstellungsverfahren vereinfacht.

Die mindestens eine Stützkante wird gemäß noch einer weiteren Ausgestaltung des erfindungsgemäßen Verfahrens an einer Stirnseite der Leichtbauplatte angeordnet. Bei einem sich in Produktionsbewegungsrichtung kontinuierlich oder getaktet fortbewegenden Schichtaufbau aus oberer Deckplatte, Mittellage und unterer Deckplatte kann auf besonders einfache Weise an zwei gegenüberliegenden Stirnseiten des Schichtaufbaus, bevorzugt an den zur Produktionsbewegungsrichtung parallelen Stirnseiten, je eine der Stützkanten angeordnet werden. Dabei kann auch vorgesehen sein, dass die Außenseite der mindestens einen Stützkante mit der Stirnkante der oberen Deckplatte und/oder der Stirnkante der unteren Deckplatte fluchtet. Es ist aber auch möglich, dass die äußere der Einzellagen eine größere Breite als eine oder mehrere der übrigen Einzellagen hat und insbesondere auch die Stirnkante der oberen Deckplatte und/oder die Stirnkante der unteren Deckplatte in Richtung der Längsebene überdeckt. Einerseits bewirkt eine solche Zuführung und Anordnung der Einzellagen eine ansprechende Optik der Stirnkante und verhindert, dass später stirnseitig Feuchtigkeit in die Leichtbauplatte eindringen kann. Außerdem können bei der späteren Leichtbauplatte durch einen solchen Aufbau einer Stützkante auch relativ hohe Belastungen im äußersten Kantenbereich zwischen der Stützkante und der bzw. den jeweils benachbarten Deckplatten übertragen werden, was insbesondere in besagtem Kantenbereich zu einer erhöhten Stabilität und Belastbarkeit führt.

Gemäß noch einer weiteren Ausgestaltung des erfindungsgemäßen Verfahrens werden mehrere, vorzugsweise alle Einzellagen in Form von Leisten oder in Form von Rollenware zugeführt. Mit Leisten sind Elemente einer vorgegebenen Länge, beispielsweise einer Länge von weniger als 10 m, bevorzugt weniger als 5 m, besonders bevorzugt weniger als 2 m, gemeint, wohingegen Rollenware endlos ist, das heißt keine vorgegebene Länge bzw. eine sehr viel größere Länge hat. Die Zuführung der Einzellagen in Form von Leisten ist zum Beispiel dann sinnvoll, wenn der aus den Deckplatten und der Mittellage gebildete Schichtaufbau erst abgelängt und dann mit der Stützkante versehen wird oder wenn Stützkanten an der quer zur Produktionsbewegungsrichtung verlaufenden Stirnkante angeordnet werden. Rollenware eignet sich dagegen besonders für die Anbringung einer Stützkante in Produktionsbewegungsrichtung, wenn der Schichtaufbau ein Endlosstrang ist.

Schließlich wird die Aufgabe gemäß einer dritten Lehre der vorliegenden Erfindung auch gelöst durch eine Vorrichtung zur Durchführung des zuvor beschriebenen Verfahrens.

Es gibt nun eine Vielzahl von Möglichkeiten, die erfindungsgemäße Leichtbauplatte, das erfindungsgemäße Verfahren und die erfindungsgemäße Vorrichtung auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Fig. 1a) bis d): eine Schnittansicht jeweils verschiedener Ausführungsbeispiele einer Leichtbauplatte, die nicht Gegenstand der vorliegenden Erfindung sind,
- Fig. 1e) und f): eine Schnittansicht jeweils verschiedener Ausführungsbeispiele einer Leichtbauplatte gemäß der vorliegenden Erfindung,
- Fig. 2a) und b): eine schematische Draufsicht jeweils verschiedener Ausführungsbeispiele des Verfahrens gemäß der vorliegenden Erfindung,
- Fig. 3a) und c): eine schematische Draufsicht jeweils weiterer verschiedener Ausführungsbeispiele des Verfahrens gemäß der vorliegenden Erfindung und
- Fig. 3b) und d): eine schematische Draufsicht verschiedener Ausführungsbeispiele eines Verfahrens, das nicht Gegenstand der vorliegenden Erfindung ist.

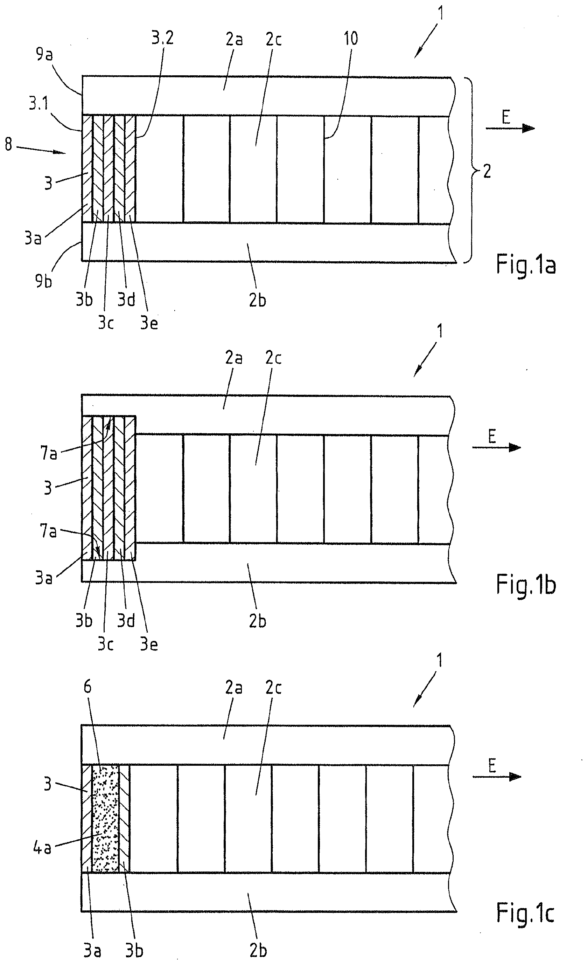

In den Figuren 1a) bis f) ist jeweils in einer Schnittansicht eine Leichtbauplatte 1 mit einer sich parallel zu einer Längsebene E erstreckenden oberen Deckplatte 2a, mit einer sich parallel zur Längsebene E erstreckenden unteren Deckplatte 2b und mit einer sich zwischen der oberen Deckplatte 2a und der unteren Deckplatte 2b erstreckenden leichten Mittellage 2c dargestellt. Die obere Deckplatte 2a und die untere Deckplatte 2b bestehen dabei aus einem Holzwerkstoff, hier einer Spanplatte. Die Mittellage 2c besteht aus einem Pappwabenmaterial.

Ferner weist die Leichtbauplatte 1 an all ihren Stirnkanten, von denen in den Figuren nur eine Stirnkante gezeigt ist, eine Stützkante 3 auf, die benachbart zur Mittellage 2c zwischen der oberen Deckplatte 2a und der unteren. Deckplatte 2b angeordnet ist. Der Aufbau der in den Figuren 1a) bis f) dargestellten Stützkante ist derselbe wie auch bei allen anderen Stützkanten der Leichtbauplatte 1, die hier aber aus Darstellungsgründen nicht sichtbar sind.

In allen dargestellten Ausführungsbeispielen weist die jeweilige Stützkante immer mehrere separate Einzellagen auf, in Fig. 1a beispielsweise die Einzellagen 3a bis 3e. Die Einzellagen verlaufen in allen Ausführungsbeispielen senkrecht zur Längsebene E und bestehen hier nicht aus einem Holzwerkstoff oder anderem lignozellulose enthaltenden. Material, sondern aus einem Schichtstoff mit mehreren harzgetränkten Papieren. Außerdem sind in allen Ausführungsbeispielen die Einzellagen parallel zueinander angeordnet und erstrecken sich von der zur Mittellage 2c gewandeten Seite der oberen Deckplatte 2a zu der zur Mittellage 2c gewandten Seite der unteren Deckplatte 2b. Schließlich ist ebenfalls bei allen dargestellten Ausführungsbeispielen vorgesehen, dass die Außenseite 3.1 der jeweiligen Stützkante 3 mit der Stirnkante 9a der oberen Deckplatte 2a und mit der Stirnkante 9b der unteren Deckplatte 2b fluchtet, während die Innenseite 3.2 der Stützkante 3 die Mittellage 2c berührt.

Die Unterschiede der einzelnen Leichtbauplatten, die in den Figuren 1a) bis f) dargestellt sind, werden im Folgenden kurz erläutert.

Gemäß dem Ausführungsbeispiel in Fig. 1a), das nicht Gegenstand der vorliegenden Erfindung ist, sind fünf Einzellagen 3a bis 3e vorgesehen, die alle dieselbe Länge, Breite und Dicke haben. Jeweils benachbarte Einzellagen berühren sich und sind miteinander verklebt. Die obere Deckplatte 2a und die untere Deckplatte 2b haben dabei eine durchgängig ebene Innenseite, an der sowohl die Mittellage 2c als auch die Stützkante 3 anliegt.

Das Ausführungsbeispiel einer Leichtbauplatte 1 gemäß Fig. 1b), das auch nicht Gegenstand der Erfindung ist, hat einen ähnlichen Aufbau, wobei hier jedoch in der oberen Deckplatte 2a und der unteren Deckplatte 2b innenseitig eine Vertiefung 7a in Form eines Falzes vorgesehen ist. Die Stützkante 3 ist dabei so in diesen Falz bzw. in diese Vertiefung 7a eingebettet, dass die jeweils innere der Einzellagen an einem vom Falz gebildeten Vorsprung zur Anlage kommt, der Falz auf diese Weise also einen Anschlag für die Stützkante 3 bildet, und dass die jeweils äußere der Einzellagen mit den Stirnkanten 9a und 9b der oberen Deckplatte 2a und der unteren Deckplatte 2b fluchtet. Auch hier berühren sich alle Einzellagen 3a bis 3e und sind miteinander verklebt.

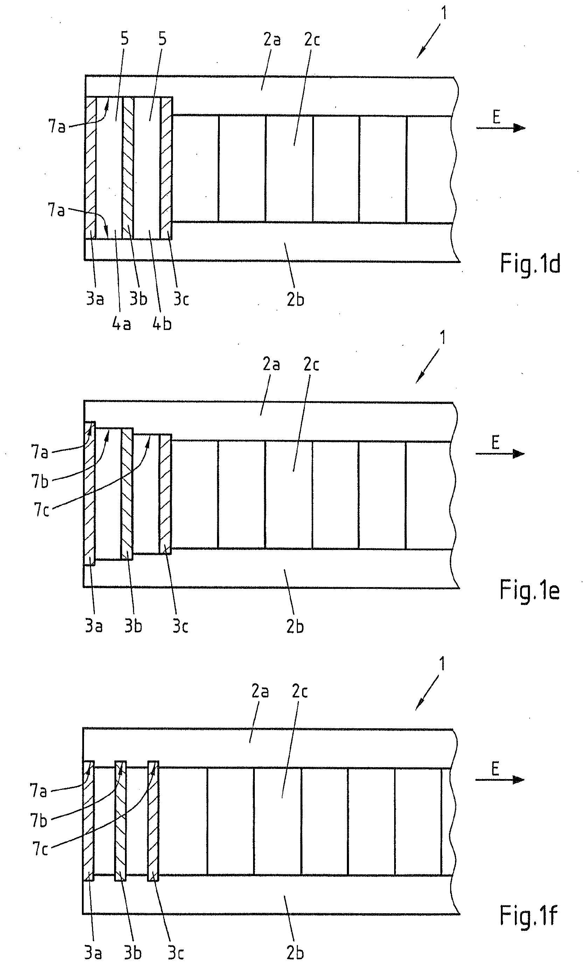

Gemäß Fig. 1.c), das ebenfalls ein Ausführungsbeispiel zeigt, das nicht Gegenstand der Erfindung ist, weist die Stützkante 3 nur zwei Einzellagen 3a und 3b auf, die ebenfalls parallel zueinander von der oberen Deckplatte 2a bis zur unteren Deckplatte 2b verlaufen, wobei jedoch ein Zwischenraum 4a zwischen den Einzellagen 3a und 3b vorgesehen ist, der vollständig mit einem einen aushärtenden Schaum bildenden Füllmaterial 6 gefüllt ist.

Die Figuren 1d) bis f) zeigen ebenfalls parallel zueinander angeordnete Einzellagen, hier die drei Einzellagen 3a bis c, wobei auch diese Einzellagen einander nicht berühren, sondern jeweils einen Zwischenraum 4a bzw. 4b ausbilden. Die Zwischenräume 4a und 4b sind dabei in allen drei Ausführungsbeispielen gemäß den Figuren 1d) bis f) mit Luft 5 gefüllt, wobei der Zwischenraum 4a und/oder 4b allgemein auch mit Füllmaterial 6, zum Beispiel Schaum, gefüllt sein kann.

Gemäß Fig. 1d), die auch ein Ausführungsbeispiel zeigt, das nicht Gegenstand der Erfindung ist, ist in der oberen Deckplatte 2a und der unteren Deckplatte 2b eine Vertiefung 7a in Form eines Falzes vorgesehen, wie dies bereits anhand von Fig. 1b) beschrieben wurde. Auch hier findet die innere Einzellage 3c an der Stufe des Falzes einen Anschlag und die äußere Einzellage 3a fluchtet mit den Stirnkanten 9a und 9b der oberen Deckplatte 2a und der unteren Deckplatte 2b.

Das erfindungsgemäße Ausführungsbeispiel gemäß Fig. 1e) unterscheidet sich von dem vorangehend beschriebenen dadurch, dass mehrere Vertiefungen 7a, 7b und 7c vorgesehen sind, und zwar in identischer Weise in der oberen Deckplatte 2a und der unteren Deckplatte 2b. Jede Vertiefung 7a, 7b und 7c nimmt dabei eine Einzellage auf, die Vertiefung 7a die Einzellage 3a, die Vertiefung 7b die Einzellage 3b und die Vertiefung 7c die Einzellage 3c. Jede Einzellage 3a, 3b und 3c findet dabei an einer jeweiligen Stufe des hier durch die Vertiefungen gebildeten Stufenfalzes einen Anschlag zur Mitte der Leichtbauplatte 1 hin.

Beim erfindungsgemäßen Ausführungsbeispiel gemäß Fig. 1f) sind ebenfalls drei Vertiefungen 7a, 7b und 7c sowohl in der oberen Deckplatte 2a als auch der unteren Deckplatte 2b vorgesehen, wobei jede Vertiefung 7a, 7b und 7c eine Einzellage 3a, 3b und 3c aufnimmt, wie dies auch vorher anhand von Fig. 1e) beschrieben wurde. Allerdings sind die Vertiefungen 7a, 7b und 7c nicht wie in Fig. 1e) unterschiedlich tief und bilden einen Stufenfalz, sondern alle Vertiefungen 7a, 7b und 7c haben dieselbe Tiefe. So bildet die Vertiefung 7a ebenfalls einen Falz und die Vertiefungen 7b und 7c bilden jeweils eine Nut.

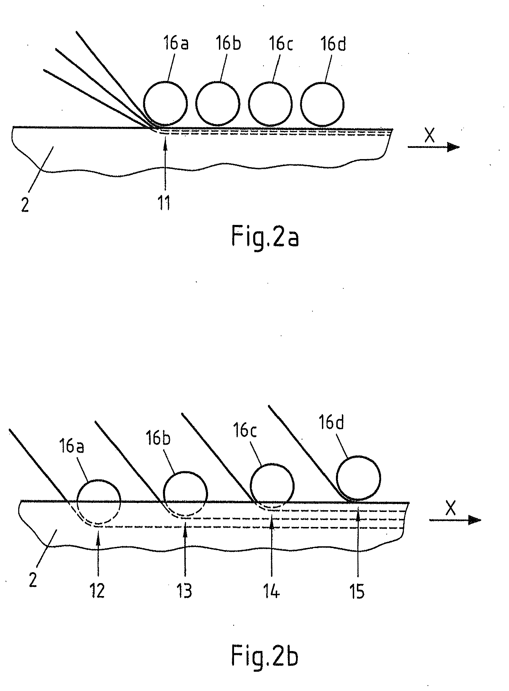

In den Figuren 2a) und b) sind jeweils Ausführungsbeispiele eines Verfahrens zur Herstellung einer Leichtbauplatte 1, wie sie zuvor anhand der Figuren 1a) bis f) beschrieben wurde, schematisch dargestellt. Ein aus oberer Deckplatte 2a, unterer Deckplatte 2b und Mittellage 2c hergestellter Schichtaufbau 2 wird, wie hier in einer Draufsicht dargestellt, in eine Produktionsbewegungsrichtung X als Endlosstrang transportiert, wobei gleichzeitig eine Stützkante 3 dadurch hergestellt wird, dass die zuvor beschriebenen, separaten Einzellagen seitlich zugeführt werden.

Gemäß Fig. 2a) werden alle Einzellagen im Schichtaufbau. 2 an bezogen auf die Produktionsbewegungsrichtung X derselben Stelle 11 über die vordere Rolle 16a zugeführt. Die nachfolgenden Rollen 16b, 16c und 16d dienen dazu, die Einzellagen an den Schichtaufbau 2 anzudrücken, bis ein eventuell vorgesehenes Klebemittel zumindest teilweise ausgehärtet ist.
Gemäß Fig. 2b) werden die Einzellagen, die die spätere Stützkante 3 bilden sollen, an bezogen auf die Produktionsbewegungsrichtung X voneinander beabstandeten Stellen 12, 13, 14 und 15 dem Schichtaufbau 2 zugeführt. An der Stelle 12 geschieht dies durch die Rolle 16a, an der stelle 13 durch die Rolle 16b, an der Stelle 14 durch, die Rolle 16c und an der Stelle 15 durch die Rolle 16d, wobei jede Rolle nur eine der Einzellagen umlenkt und an den Schichtaufbau 2 drückt. Auf diese Weise entsteht eine Stützkante 3, die im Wesentlichen denselben Aufbau wie in den Figuren 1d) bis f) hat, hierbei jedoch aus vier separaten Einzellagen besteht.

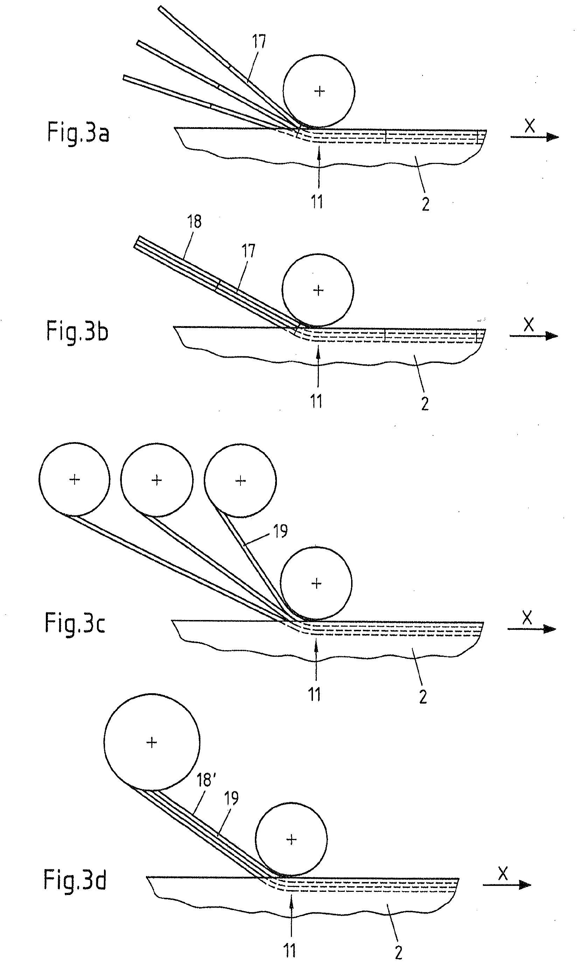

In den Figuren 3a) bis d) sind weitere Möglichkeiten dargestellt, eine Stützkante 3 bildende Einzellagen einem Schichtaufbau 2 aus oberer Deckplatte 2a, unterer Deckplatte 2b und Mittellage 2c zuzuführen. Auch diese Darstellungen stellen eine Draufsicht auf einen sich in Produktionsbewegungsrichtung X fortlaufenden Endlosstrang dar, wobei die Zuführung der Einzellagen von der Seite erfolgt.

Bei dem erfindungsgemäßen Ausführungsbeispiel gemäß Fig. 3a) werden die Einzellagen einzeln in Form von Leisten 17 einer vorgegebenen Länge an bezogen auf die Produktionsbewegungsrichtung X derselben Stelle 11 dem Schichtaufbau 2 zugeführt.

Gemäß Fig. 3b), die ein Ausführungsbeispiel zeigt, das nicht Gegenstand der vorliegenden Erfindung ist, werden ebenfalls Leisten 17 zugeführt, hier jedoch nicht einzeln, sondern in Form von Paketen 18.

In den Figuren 3c) und d) erfolgt die Zufuhr in Form von Rollenware 19, wobei die Zufuhr in Fig. 3c), die ein Ausführungsbeispiel der vorliegenden Erfindung zeigt, ebenfalls einzeln und in Fig. 3d), die ein Ausführungsbeispiel zeigt, das nicht Gegenstand der Erfindung ist, in Form von einem Paket 18' erfolgt.

## Patentansprüche

1. Leichtbauplatte (1)
- mit einer sich parallel zu einer Längsebene (E) erstreckenden oberen Deckplatte (2a),
- mit einer sich parallel zur Längsebene (E) erstreckenden unteren Deckplatte (2b),
- mit einer sich zwischen der oberen Deckplatte (2a) und der unteren Deckplatte (2b) erstreckenden leichten Mittellage (2c) und
- mit mindestens einer Stützkante (3), die sich von der zur Mittellage (2c) gewandten Seite der oberen Deckplatte (2a) zu der zur Mittellage (2c) gewandten Seite der unteren Deckplatte (2b) erstreckt und in Richtung der Längsebene (E) benachbart zur Mittellage (2c) angeordnet ist,
wobei die mindestens eine Stützkante (3) mehrere separate Einzellagen (3a,3b,3c,3d,3e) aufweist,
**dadurch gekennzeichnet, dass** in der oberen und/oder unteren Deckplatte (2a,2b) jeweils innenseitig mehrere Vertiefungen (7a,7b,7c) vorgesehen sind, wobei jede Vertiefung (7a,7b,7c) der jeweiligen Deckplatte (2a,2b) mindestens eine Einzellage (3a,3b,3c) der Stützkante (3) aufnimmt und wobei die jeweilige Einzellage (3a,3b,3c) in der jeweiligen Vertiefung (7a,7b,7c) einen Anschlag zur Mitte der Leichtbauplatte (1) hin findet.

2. Leichtbauplatte (1) nach Anspruch 1, **dadurch gekennzeichnet, dass** eine oder mehrere Einzellagen (3a,3b,3c,3d,3e) aus einem Lignozellulose enthaltenden Material, insbesondere einem Holzwerkstoff, oder aus einem Schichtstoff bestehen und/oder aus unterschiedlichen Materialien bestehen und/oder unterschiedliche Materialeigenschaften aufweisen.

3. Leichtbauplatte (1) nach Anspruch 1 oder 2, **dadurch gekennzeichnet, dass** zwischen benachbarten Einzellagen (3a,3b,3c,3d,3e) ein Zwischenraum (4a,4b) ausgebildet ist, wobei mindestens einer der Zwischenräume (5,6) zumindest teilweise mit Luft (5) und/oder einem Füllmaterial (6), insbesondere einem Schaum, gefüllt ist.

4. Leichtbauplatte (1) nach einem der vorangehenden Ansprüche, **dadurch gekennzeichnet, dass** in das Material einer oder mehrerer, vorzugsweise aller Einzellagen (3a,3b,3c,3d,3e) und/oder zwischen zwei benachbarten, vorzugsweise zwischen allen benachbarten Einzellagen (3a,3b,3c,3d,3e), eine Armierung eingebracht ist, die insbesondere Fasermaterial und/oder Metall aufweist.

5. Leichtbauplatte (1) nach einem der vorangehenden Ansprüche, **dadurch gekennzeichnet, dass** in der oberen Deckplatte (2a) und/oder der unteren Deckplatte (2b) innenseitig mindestens ein Falz (7a,7b,7c) oder eine Nut (7b,7c) vorgesehen ist.

6. Leichtbauplatte (1) nach einem der vorangehenden Ansprüche, **dadurch gekennzeichnet, dass** die Vertiefungen (7a,7b,7c) unterschiedlich tief sind und insbesondere einen Stufenfalz bilden.

7. Leichtbauplatte (1) nach einem der vorangehenden Ansprüche, **dadurch gekennzeichnet, dass** die Gesamtdicke der Leichtbauplatte (1) höchstens 19 mm, bevorzugt höchstens 15 mm, besonders bevorzugt höchstens 13 mm, und/oder die Dicke mindestens einer Deckplatte (2a,2b), insbesondere beider Deckplatten (2a,2b), höchstens 3,5 mm, bevorzugt höchstens 2,5 mm, besonders bevorzugt höchstens 1,8 mm, beträgt.

8. Verfahren zur Herstellung einer Leichtbauplatte (1), insbesondere einer Leichtbauplatte (1) nach einem der vorangehenden Ansprüche,
- bei dem eine obere Deckplatte (2a), eine untere Deckplatte (2b) und eine Mittellage (2c) bereitgestellt werden,
- bei dem die obere Deckplatte (2a), die untere Deckplatte (2b) und die Mittellage (2c) zu einem Schichtaufbau (2) angeordnet und miteinander verbunden werden, wobei sich die obere Deckplatte (2a), die untere Deckplatte (2b) und die Mittellage (2c) parallel zu einer Längsebene (E) erstrecken,
- bei dem der Schichtaufbau (2) in eine Produktionsbewegungsrichtung (X) als Endlosstrang transportiert wird,
- bei dem in der oberen Deckplatte (2a) und/oder der unteren Deckplatte (2b) jeweils innenseitig mehrere Vertiefungen (7a,7b,7c) vorgesehen werden und
- bei dem mindestens eine Stützkante (3) aus mehreren separaten Einzellagen (3a,3b,3c,3d,3e) dadurch gebildet wird, dass die separaten Einzellagen (3a,3b,3c,3d,3e) dem Schichtaufbau (2) in Produktionsbewegungsrichtung (X) einzeln seitlich zugeführt werden und dass in jede Vertiefung (7a,7b,7c) eine oder mehrere Einzellagen (3a,3b,3c) eingesetzt werden.

9. Verfahren nach Anspruch 8, **dadurch gekennzeichnet, dass** mehrere, vorzugsweise alle Einzellagen (3a,3b,3c,3d,3e) bezogen auf die Produktionsbewegungsrichtung (X) an derselben Stelle (11) oder an voneinander beabstandeten Stellen (12,13,14,15) mit dem Schichtaufbau (2) zusammengeführt werden.

10. Verfahren nach Anspruch 8 oder 9, **dadurch gekennzeichnet, dass** zwischen benachbarten Einzelllagen (3a,3b,3c,3d,3e) ein Zwischenraum (5,6) ausgebildet wird, wobei mindestens einer der Zwischenräume (5,6) zumindest teilweise befüllt, insbesondere ausgeschäumt, wird.

11. Verfahren nach einem der Ansprüche 8 bis 10, **dadurch gekennzeichnet, dass** in der oberen Deckplatte (2a) und/oder der unteren Deckplatte (2b) innenseitig mehrere Vertiefungen (7a,7b,7c) vorgesehen werden, die unterschiedlich tief sind und insbesondere einen Stufenfalz bilden.

12. Verfahren nach einem der Ansprüche 8 bis 11, **dadurch gekennzeichnet, dass** mehrere, vorzugsweise alle Einzellagen (3a,3b,3c,3d,3e) in Form von Leisten (17) oder in Form von Rollenware (19) zugeführt werden.

## Claims

1. Lightweight board (1)
- with an upper cover plate (2a) extending parallel to a longitudinal plane (E),
- with a lower cover plate (2b) extending parallel to the longitudinal plane (E),
- with a light central layer (2c) extending between the upper cover plate (2a) and the lower cover plate (2b), and
- with at least one supporting edge (3) which extends from the side of the upper cover plate (2a) facing the central layer (2c) to the side of the lower cover plate (2b) facing the central layer (2c) and is arranged in the direction of the longitudinal plane (E) adjacent to the central layer (2c),
the at least one supporting edge (3) having a plurality of separate individual layers (3a, 3b, 3c, 3d, 3e),
**characterized in that** a plurality of recesses (7a, 7b, 7c) are provided on the inside in each case in the upper and/or lower cover plate (2a, 2b), wherein each recess (7a, 7b, 7c) of the respective cover plate (2a, 2b) accommodates at least one individual layer (3a, 3b, 3c) of the supporting edge (3) and wherein the respective individual layer (3a, 3b, 3c) finds a stop in the respective recess (7a, 7b, 7c) towards the centre of the lightweight panel (1).

2. Lightweight building board (1) according to claim 1, **characterized in that** one or more individual layers (3a, 3b, 3c, 3d, 3e) consist of a lignocellulose-containing material, in particular a wood material, or of a laminate and/or consist of different materials and/or have different material properties.

3. Lightweight panel (1) according to claim 1 or 2, **characterized in that** an intermediate space (4a, 4b) is formed between adjacent individual layers (3a, 3b, 3c, 3d, 3e), at least one of the intermediate spaces (5, 6) being at least partially filled with air (5) and/or a filling material (6), in particular a foam.

4. Lightweight building board (1) according to one of the preceding claims, **characterized in that** a reinforcement is introduced into the material of one or more, preferably all individual layers (3a, 3b, 3c, 3d, 3e) and/or between two adjacent, preferably between all adjacent individual layers (3a, 3b, 3c, 3d, 3e), which reinforcement comprises in particular fibre material and/or metal.

5. Lightweight construction panel (1) according to one of the preceding claims, **characterized in that** at least one fold (7a, 7b, 7c) or a groove (7b, 7c) is provided on the inside in the upper cover panel (2a) and/or the lower cover panel (2b).

6. Lightweight building board (1) according to one of the preceding claims, **characterized in that** the recesses (7a, 7b, 7c) are of different depths and in particular form a stepped fold.

7. Lightweight panel (1) according to one of the preceding claims, **characterized in that** the total thickness of the lightweight panel (1) is at most 19 mm, preferably at most 15 mm, particularly preferably at most 13 mm, and/or the thickness of at least one cover panel (2a, 2b), in particular both cover panels (2a, 2b), is at most 3.5 mm, preferably at most 2.5 mm, particularly preferably at most 1.8 mm.

8. Method of manufacturing a lightweight panel (1), in particular a lightweight panel (1), according to one of the preceding claims,
- in which an upper cover plate (2a), a lower cover plate (2b) and a central layer (2c) are provided,
- in which the upper cover plate (2a), the lower cover plate (2b) and the central layer (2c) are arranged to form a layered structure (2) and are connected to one another, the upper cover plate (2a), the lower cover plate (2b) and the central layer (2c) extending parallel to a longitudinal plane (E),
- in which the layer structure (2) is transported in a production movement direction (X) as an endless strand,
- in which a plurality of recesses (7a, 7b, 7c) are provided on the inside in the upper cover plate (2a) and/or the lower cover plate (2b) and
- in which at least one supporting edge (3) is formed from a plurality of separate individual layers (3a, 3b, 3c, 3d, 3e) in that the separate individual layers (3a, 3b, 3c, 3d, 3e) are fed individually laterally to the layer structure (2) in the direction of production movement (X) and in that one or more individual layers (3a, 3b, 3c) are inserted into each depression (7a, 7b, 7c).

9. Method according to claim 8, **characterized in that** a plurality, preferably all, of the individual layers (3a, 3b, 3c, 3d, 3e) relative to the direction of production movement (X) are brought together with the layer structure (2) at the same point (11) or at spaced-apart points (12, 13, 14, 15).

10. Method according to claim 8 or 9, **characterized in that** an intermediate space (5, 6) is formed between adjacent individual layers (3a, 3b, 3c, 3d, 3e), at least one of the intermediate spaces (5, 6) being at least partially filled, in particular filled with foam.

11. Method according to one of claims 8 to 10, **characterized in that** a plurality of recesses (7a, 7b, 7c) are provided on the inside in the upper cover plate (2a) and/or the lower cover plate (2b), which recesses are of different depths and in particular form a stepped rebate.

12. Method according to one of claims 8 to 11, **characterized in that** several, preferably all, individual layers (3a, 3b, 3c, 3d, 3e) are supplied in the form of strips (17) or in the form of roll material (19).

## Revendications

1. Panneau de construction léger (1)
- avec une plaque de recouvrement supérieure (2a) s'étendant parallèlement à un plan longitudinal (E),
- avec une plaque de recouvrement inférieure (2b) s'étendant parallèlement au plan longitudinal (E),
- avec une couche centrale légère (2c) s'étendant entre la plaque de recouvrement supérieure (2a) et la plaque de recouvrement inférieure (2b), et
- avec au moins une arête d'appui (3) qui s'étend du côté de la plaque de recouvrement supérieure (2a) tourné vers la couche centrale (2c) jusqu'au côté de la plaque de recouvrement inférieure (2b) tourné vers la couche centrale (2c) et qui est disposée de façon adjacente, dans la direction du plan longitudinal (E), à la couche centrale (2c), l'au moins une arête de support (3) ayant une pluralité de couches individuelles séparées (3a, 3b, 3c, 3d, 3e),
**caractérisé en ce que** plusieurs évidements (7a, 7b, 7c) sont prévus, respectivement du côté intérieur, dans la plaque de recouvrement supérieure et/ou inférieure (2a, 2b), chaque évidement (7a, 7b, 7c) de la plaque de recouvrement respective (2a, 2b) recevant au moins une couche individuelle (3a, 3b, 3c) de l'arête d'appui (3) et où la couche individuelle respective (3a, 3b, 3c) trouve dans l'évidement respectif (7a, 7b, 7c) un arrêt en direction du centre du panneau léger (1).

2. Panneau de construction léger (1) selon la revendication 1, **caractérisé en ce qu'**une ou plusieurs couches individuelles (3a, 3b, 3c, 3d, 3e) sont constituées d'un matériau contenant de la lignocellulose, en particulier un matériau en bois, ou d'un stratifié et/ou sont constituées de différents matériaux et/ou ont différentes propriétés matérielles.

3. Panneau de construction léger (1) selon la revendication 1 ou 2, **caractérisé en ce qu'**un espace intermédiaire (4a, 4b) est formé entre des couches individuelles adjacentes (3a, 3b, 3c, 3d, 3e), au moins l'un des espaces intermédiaires (5, 6) étant au moins partiellement rempli d'air (5) et/ou d'un matériau de remplissage (6), notamment une mousse.

4. Panneau de construction léger (1) selon l'une des revendications précédentes, **caractérisé en ce qu'**un renfort est introduit dans le matériau d'une ou plusieurs couches individuelles (3a, 3b, 3c, 3d, 3e), de préférence de toutes les couches individuelles (3a, 3b, 3c, 3d, 3e) et/ou entre deux couches adjacentes, de préférence entre toutes les couches individuelles adjacentes (3a, 3b, 3c, 3d, 3e), le renfort comprenant notamment un matériau en fibres et/ou un métal.

5. Panneau de construction léger (1) selon l'une des revendications précédentes, **caractérisé en ce qu'**au moins un pli (7a, 7b, 7c) ou une rainure (7b, 7c) est prévu du côté intérieur de la plaque de recouvrement supérieure (2a) et/ou le la plaque de recouvrement inférieure(2b).

6. Panneau de construction léger (1) selon l'une des revendications précédentes, **caractérisé en ce que** les évidements (7a, 7b, 7c) sont de différentes profondeurs et forment en particulier une feuillure à épaulement.

7. Panneau de construction léger (1) selon l'une des revendications précédentes, **caractérisé en ce que** l'épaisseur totale du panneau de construction léger (1) est d'au plus 19 mm, de préférence d'au plus 15 mm, de façon particulièrement préférable d'au plus 13 mm, et/ou l'épaisseur d'au moins un panneau de recouvrement (2a, 2b), en particulier des deux panneaux de recouvrement (2a, 2b), est au plus 3,5 mm, de préférence d'au plus 2,5 mm, de façon particulièrement préférable d'au plus 1,8 mm.

8. Procédé de fabrication d'un panneau de construction léger (1), en particulier d'un panneau de construction léger (1), selon l'une des revendications précédentes,
- dans lequel une plaque de recouvrement supérieure (2a), une plaque de recouvrement inférieure (2b) et une couche centrale (2c) sont mises à disposition,
- dans lequel la plaque de recouvrement supérieure (2a), la plaque de recouvrement inférieure (2b) et la couche centrale (2c) sont disposées en une structure en couches (2) et sont reliées entre elles, la plaque de recouvrement supérieure (2a), la plaque de recouvrement inférieure (2b) et la couche centrale (2c) s'étendant de façon parallèle à un plan longitudinal (E),
- dans lequel la structure en couches (2) est transportée dans une direction de mouvement de production (X) sous la forme d'un flux de matériau sans fin,
- dans lequel plusieurs évidements (7a, 7b, 7c) sont prévus respectivement du côté intérieur de la plaque de recouvrement supérieure (2a) et/ou de la plaque de recouvrement inférieure (2b), et
- dans lequel au moins une arête d'appui (3) est constituée d'une pluralité de couches individuelles séparées (3a, 3b, 3c, 3d, 3e) est formée, de par le fait que les couches individuelles séparées (3a, 3b, 3c, 3d, 3e) sont amenées individuellement latéralement à la structure en couches (2) dans la direction du mouvement de production (X) et qu'une ou plusieurs couches individuelles (3a, 3b, 3c) sont introduites dans chaque dépression (7a, 7b, 7c).

9. Procédé selon la revendication 8, **caractérisé en ce qu'**une pluralité, de préférence toutes les couches individuelles (3a, 3b, 3c, 3d, 3e) sont réunies, par rapport à la direction du mouvement de production (X), avec la structure en couches (2) au même point (11) ou en des points espacés (12, 13, 14, 15).

10. Procédé selon la revendication 8 ou 9, **caractérisé en ce qu'**un espace intermédiaire (5,6) est formé entre des couches individuelles adjacentes (3a, 3b, 3c, 3d, 3e), au moins un des espaces intermédiaires (5, 6) étant au moins partiellement rempli, notamment rempli de mousse.

11. Procédé selon l'une des revendications 8 à 10, **caractérisé en ce que** plusieurs évidements (7a, 7b, 7c) sont prévus du côté intérieur dans la plaque de recouvrement supérieure (2a) et/ou dans la plaque de recouvrement inférieure (2b), lesquels évidements ont des profondeurs différentes et forment notamment une feuillure à épaulement.

12. Procédé selon l'une des revendications 8 à 11, **caractérisé en ce que** plusieurs couches individuelles (3a, 3b, 3c, 3d, 3e), de préférence toutes, sont fournies sous forme de bandes (17) ou sous forme de matériau en rouleau (19).
